# EUROPEAN PATENT APPLICATION

(11) **EP 0 829 216 A2**
(43) Date of publication of application: **18.03.1998**
(21) Application number: 97116003.1
(22) Date of filing: 15.09.1997
(51) Int. Cl.: A47G 7/02, A01G 5/04

(54) **Element for supporting and securing of floral composition materials**

(30) Priority: 16.09.1996 IT PM960036 U
(71) Applicant: Zanella, Tullio, 31030 Castello di Godego (TV) (IT); Beraldo, Valeriano, 31033 Castelfranco Veneto (TV) (IT); Trinco, Renato, 35010 Villa del Conte (PD) (IT)
(72) Inventor: Zanella, Tullio, 31030 Castello di Godego (TV) (IT)
(74) Representative: Dalla Rosa, Adriano

(57) **Abstract**

Supporting and securing element which can be utilized in combination with at least a sponge (22), a pot or the like in which the floral materials are inserted.

Element provided with at least a shaped flange (10), co-operating with the sponge or pot (22), and adaptable on a corresponding saucer (13) filled with a water reserve, and provided with shaped teeth (16) engaging the sponge or pot, so as to maintain them firm on the application position thereof.

## Description

The invention relates to an element for supporting and securing of flowers, plants and materials for floral compositions of various kind, adapted to permit such flowers, plants and materials to be supported, and secured in a simple and effective manner, by maintaining them wet for long periods of time. Supporting elements of various kind for performing the functions referred to are known, consisting substantially of at least an adequately dimensioned lower support tray, in which a sponge suitably cut to such sizes as to be adapted into the same tray is introduced from the upper side therein, in which sponge the flowers and other materials for the respectively desired floral compositions are then introduced therein, at the condition in which water which is subsequently introduced into the tray is absorbed by the sponge, thus by maintaining the flowers and any other material wet for long periods of time.

The sponge is normally secured in the supporting elements referred to by inserting sponge wedges between the tray edge and the same sponge, or sometimes also by utilizing additional reinforcement material such as for instance adhesive tape, binding metallic nets etc..., above all when the flowers and any other possible material are provided with considerable dimensions, for example for preparing funeral bags, for marriages etc.., in order to stabilize the assembly in a better way and therefore prevent such flowers and materials from being flaked undesiredly and prematurely.

However, these supporting elements require various materials and manual operations for securing in positions the flowers and materials and therefore do not lend themselves for a possible production on an industrial scale thereof.

Moreover, supporting elements consisting always of at least a support tray and a sponge of the kind referred to are also known, wherein such sponge is included in advance into suitable plastic supports which permit the flower stalks and the materials to pass therethrough.

However, these kinds of supporting elements require also various operations for securing the flowers and materials in position and furthermore lend themselves only for limited applications, due to the scarce available water reserve for wetting them and the reduced rest surface which is insufficient for the assembly stability, particularly for floral compositions with considerable extent.

Additional known supporting elements for the same functions referred to are formed by magnetizable flat surfaces, commonly used for securing the flowers and materials to decorate the cars for the wedding processions, which however do not guarantee a sufficient assembly stability, by compelling the car driver to maintain a particularly moderate speed so as do not compromise the same stability, and also by involving high cost burdens for providing such assembly.

Finally, other supporting elements normally used for the same scope are the suction cups, which are secured below the sponge carrier base for the removable application in position of the sponge, or glues or adhesive tapes, which however have the inconveniences in the first case do not guarantee a safe adhesion under all circumstances because of the unavoidable possibilities of separation of the same suction cups from the contact surface, and in the second case of the possible soilings and damagings which such glues and adhesive tapes may cause on the application and supporting surfaces for the sponge with the flowers and any material.

Therefore, it would be desirable, and is the object of the present invention, to provide for an element for supporting flowers and any material of various kind in which the above mentioned inconveniences are eliminated and which is of simple type and can be assembled quickly and lends itself for being manufactured on an industrial scale with limited cost burdens.

This element is made with the costructive characteristics substantially described, with particular reference to the attached claims of the present patent.

The invention will be better understood from the following description, given solely by way of not-limiting example and with reference to the accompanying drawings, wherein :
- Fig. 1 shows a plan view of the supporting element according to the invention, assembled on its application position and a first embodiment thereof;
- Fig. 2 shows a schematic side view of the element of the Fig. 1;
- Fig. 3 shows a plan view of the supporting element according to the invention, assembled on its application position and a second embodiment thereof;
- Fig. 4 shows a schematic side view of the element of Fig. 3 ;
- Fig. 5 shows schematically a front view of an additional component part of the present supporting element, co-operating with the same element and forming a third embodiment of the invention ;
- Figs. 6 and 7 show schematically a respective front and plan view of a further additional component part of the present supporting element, co-operating therewith.

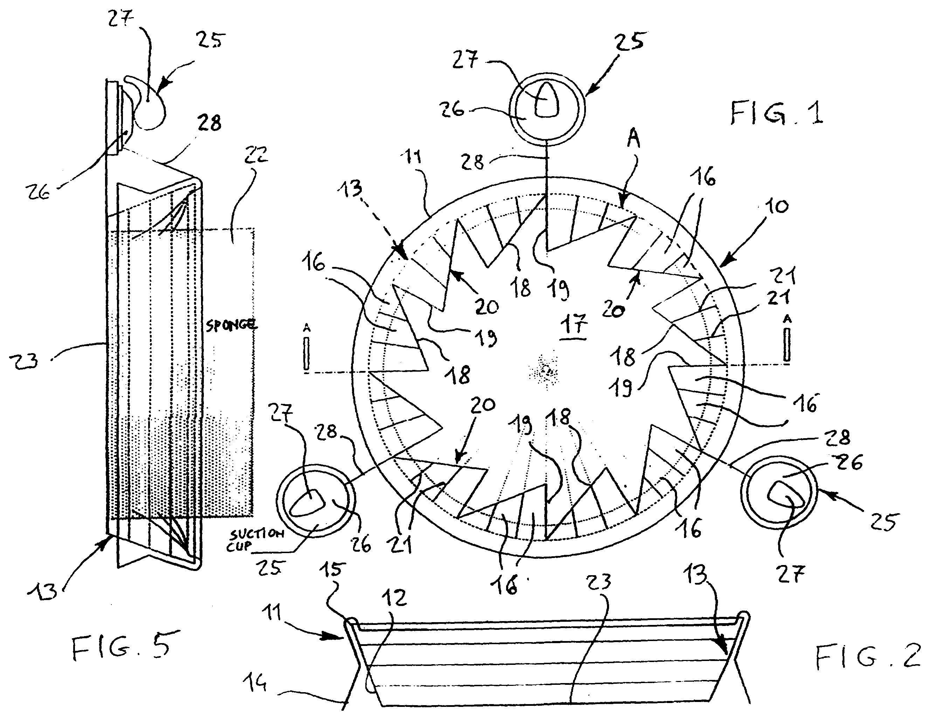

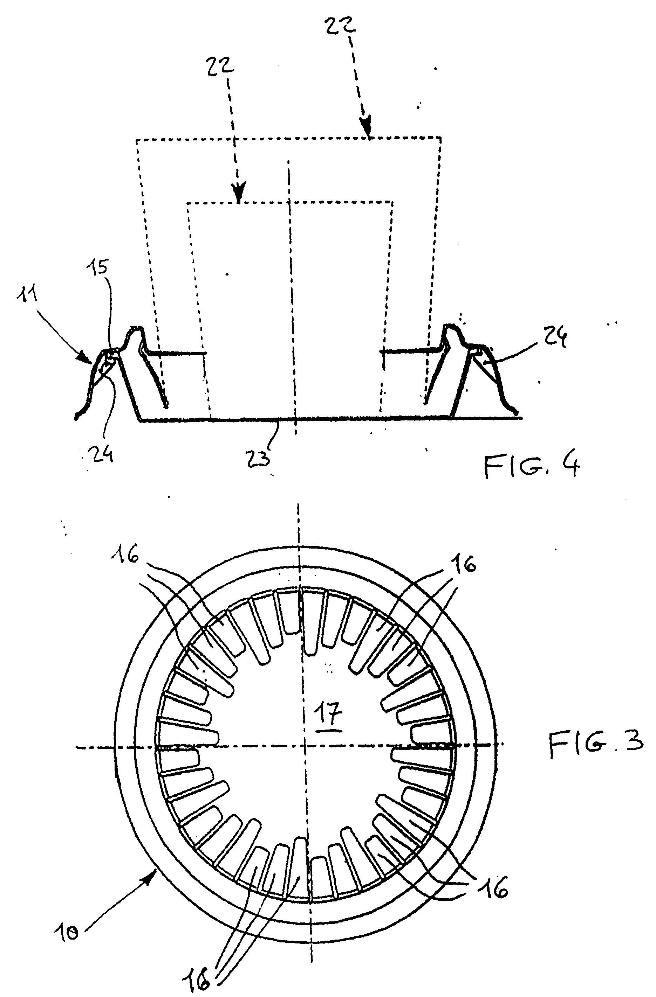

In the above specified Figures it is schematically illustrated a supporting and securing element according to the invention, provided for supporting flowers, plants and materials for floral compositions of various kind. As particularly evident from the Figs. 1 and 2, in which a possible first embodiment of the supporting and securing element according to the invention is represented, such element is formed substantially by a shaped flange 10 made of molded plastic material, having limited thickness, in the present case made of circular form, which however can be also made with other suitable shapes and is so dimensioned as to be adapted with its peripheral edge 11 on the corresponding peripheral wall 12 of a conventional saucer 13 made of plastic material, and for this purpose the peripheral edge 11 of the flange 10 is advantageously provided with a terminal portion 14 bent downwards, which engages a radial projected edge 15 of such peripheral wall 12, thereby determining an effective reciprocal junction of the supporting element with the saucer 13.

In turn, the flange 10 is provided with a plurality of shaped teeth 16 provided along a pitch line (marked with the letter A) of the same flange and directed radially toward the central area of such flange for a determined maximal lenght thereof, thereby delimiting a central through hole 17, said teeth being provided by means of a set of rectilinear slots 18 and 19 with slants which are different to each other, which are provided through the surface of the flange 10 and then by providing further rectilinear slots 21 almost parallel thereamong on the so defined surface portions 20.

In this way, teeth 16 having lenght different to each other are obtained on each surface portion 20, whose respective lenght is identical to that of the corresponding teeth of the other flange surface portions.Then, in the so obtained supporting element it can be introduced at least a sponge 22 of conventional kind, cut in advance with such dimensions as to be adapted through the flange central hole 17, which sponge accordingly is passed through such central hole 17 and pushed with its lower base surface against the associated bottom surface 23 of the saucer 13. Then, under these conditions, the compression exerted on the sponge 22 pushed inwardly the saucer 13 causes firstly the bending downwards of the shaped and flexible teeth 16 of the flange, thanks to the contact thereof with the side surface of the same sponge, with consequent penetration of such sponge through said central hole 17 and subsequently causes a temporary deflection downwards of the bottom 23 which is realized slightly bent upwards, so that as soon as the sponge has been fully introduced in the saucer 13 and is no more compressed, such bottom 23 returns resiliently to the primitive position thereof thereby pushing the same sponge slightly upwards, in a manner to provide for the engagement of its lateral surface with the different teeth 16, which therefore provide to stop such sponge in position by preventing undesired extractions thereof with respect to the saucer 13.

Subsequently, a water reserve is introduced in the saucer 13 by pouring it directly on the sponge or through the different slots 18 and 19, while on the sponge 22 there are inserted the flowers and any possible material for the desired floral compositions, which thus remain wet for relatively long periods of time with water which is absorbed by the sponge from the water reserve below it.

According to the invention, it is also possible to realize the supporting and securing element integral with the saucer. Thus, it appears evident that the supporting element according to the invention is made in a constructively simple and useful way, and furthermore ensures a high assembly stability, by avoiding undesired incidental separations of the various component parts of the same assembly, and lends itself for the manufacture on industrial scale with reduced cost burdens, with the possibility to be employed with sponges having different shapes and sizes too, thanks to the presence of teeth with different lenghts which adapt and engage themselves with such sponges.

Likewise, this supporting and securing element lends itself for supporting effectively in the manner as described also sponges included into nets made of metal or other materials, thereby improving the engagement of the sponges with the flange teeth.

By turning now to the Figs. 3 and 4, in which a second possible embodiment of the present supporting and securing element is represented, it is noted that also in this case such element is made like that one previously described, and differs therefrom in that the peripheral edge 11 of the flange 10 is shaped slightly different, being projected downwards up to the level of the bottom 23 of the saucer 13, so as to increase the rest surface of this latter, and being provided with a set of hooking teeth 24 for engaging the flange with the radial projected edge 15 of the same saucer, while in turn the shaped teeth 16 of such flange are no more shaped as saw teeth, as previously, but they are of rectilinear form and grouped in set of teeth with different lenght, which are put side-by-side with the same criteria and for the same scopes of the above described teeth.

According to the invention, it is also possible to utilize the assembly supporting and securing element-saucer to secure plant cultivation pots to the associated saucer, with consequent advantages of providing a better stability and usefulness.

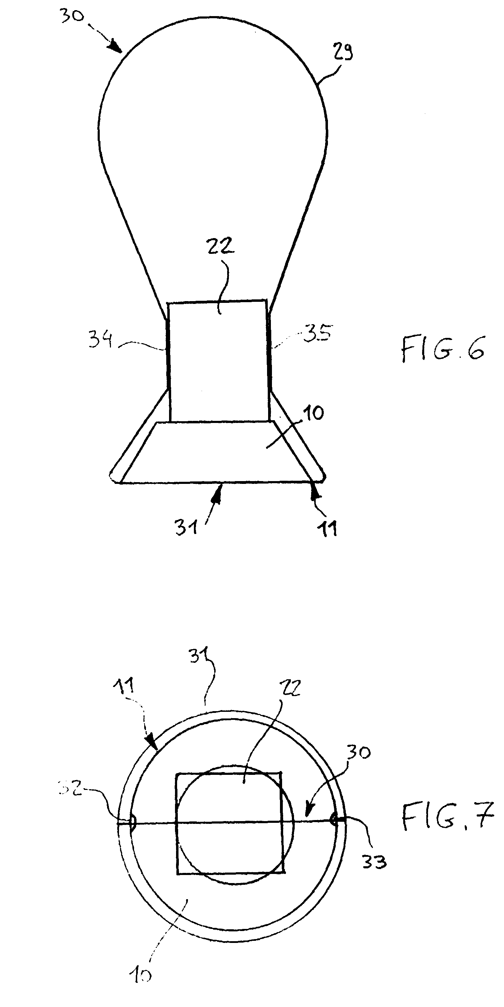

In the Fig. 5 it is shown now a component part such as a suction cup 25 which is employed in combination with the present supporting and securing element, for permitting the effective securing thereof in different positions. To this purpose, it is noted that such suction cup is provided, at its outer surface 26 near the usual application arm 27, with a flexible applying arm 28 whose ends engage the one the suction cup outer surface 26 and the other one the peripheral edge of the flange 10, therefore being hooked to this latter. Besides, this supporting and securing element may be also hooked on a raised position, for example by means of a plurality of chains or similar supporting members (not shown), whose lower and upper ends are respectively hooked to either the flange 10 or the saucer 13, and at least a common hanging element (not shown), which can be hung on the desired position. In the Figs. 6 and 7 it is shown another component part which is applied in combination with the present supporting and securing element, for permitting an effective catch thereof and securing the sponge in position by preventing any undesirable displacement thereof.

This further component part is substantially constituted by a metallic wire 29, suitably shaped for engaging both the present supporting and securing element and the sponge 22 supported by the same, by preventing any displacement of this latter, as well as which can be grasped by the user so as to be able thus to displace the assembly supporting and securing element-sponge on different application positions thereof. To this aim, in the present example such wire 29 (which can be made of metal, plastic or other suitable material) is shaped with an upper part 30 of bent form acting as handle, extended in a vertical direction for such an adequate height as to be able to be grasped by the user at a not stooped condition, and a lower part 31 of circular form, bent orthogonally with respect to the upper part 30 and joined to the relative wire ends, so as to be able to engage the lower side of the bottom of the saucer 13, after that this latter has been inserted through the central hole 17 of the flange 10 and the ends of wire 29 are passed through corresponding openings 32 and 33 provided along the peripheral edge 11 of said flange, thereby determining the support of the assembly supporting and securing element-sponge.

In turn, the upper part 30 and the lower part 31 of the wire are joined together by means of two intermediate rectilinear and vertical wire parts 34 and 35, which are parallel and approached to each other in a manner to be adapted to and enclose externally each sponge along two sides of the peripheral outline thereof, thereby maintaining it in position and preventing any displacement thereof, which intermediate parts widen upwards and downwards and join themselves with the corresponding upper and lower parts of the same wire.

Obviously, the supporting and securing element according to the invention may be also made with different constructive variants thereof, for example by arranging decorative crepe paper or other suitable decorative materials into direct contact of the saucer, which accordingly is adequately shaped concave, for applying the same paper by means of a band, rubber band or the like, so as to provide for the desired aesthetical effects, thus without departing from the protection sphere of the present invention.

## Claims

1. Element for supporting and securing of flowers and materials for floral compositions of various kind, which can be applied on different positions, and utilized in combination with at least a sponge, a pot or the like in which the floral materials are inserted, characterized by at least a shaped flange (10) co-operating with said sponge or pot (22), and adaptable onto at least a corresponding vessel such as a saucer (13), which in case can be filled with water reserve, and provided with catch elements (16) realized preferably as shaped teeth adapted to engage said sponge or pot (22), so as to maintain them firm on the application position thereof.

2. Supporting and securing element according to claim 1, characterized in that said teeth (16) are provided along a pitch line of said flange (10) and directed radially towards the central area of the same flange, thereby delimiting a central through hole (17) for passing said sponge or pot (22), said teeth (16) being made with different forms and dimensions to permit the sponges or pots having different forms and sizes to pass therethrough and to be secured on position thereto.

3. Supporting element according to claim 2, characterized in that said teeth (16) are grouped in set of teeth with different lenght put side-by-side.

4. Supporting element according to the preceding claims, characterized in that said flange (10) may be secured on the respective application position by means of at least a suction cup (25), provided with an applying arm (28) which can be hooked to the peripheral edge (11) of said flange (10).

5. Supporting element according to the preceding claims, characterized in that it can be hung on a raised position by means of chains or the like, hooked at their one end to said supporting element and at their other end to at least a common hanging element which can be hung on the raised position.

6. Supporting element according to the preceding claims, characterized in that said flange (10) is supported by a lower part (31) of a wire (29) provided with an upper part (30) having bent form with vertical extent acting as a handle, and an intermediate part (34, 35) having vertical rectilinear form, acting externally on said sponge (22), so as to keep it in position by preventing displacements thereof, and joined with said lower part (31) and upper part (30).

7. Supporting element according to claim 6, characterized in that said lower part (31) is of circular form and bent orthogonally with respect to said upper part (30).
